# EUROPEAN PATENT APPLICATION

(11) **EP 4 613 423 A1**
(43) Date of publication of application: **10.09.2025**
(21) Application number: 25162025.8
(22) Date of filing: 06.03.2025
(51) Int. Cl.: B23Q 7/04

(54) **MACHINING SYSTEM**

(30) Priority: 07.03.2024 JP 2024035144
(71) Applicant: DMG Mori Co., Ltd., Yamatokoriyama-shi, Nara 639-1160 (JP)
(72) Inventor: MIURA, Hironori, Yamatokoriyama-shi, Nara, 639-1160 (JP); KOMORITA, Kosuke, Yamatokoriyama-shi, Nara, 639-1160 (JP)
(74) Representative: Isarpatent

(57) **Abstract**

[Problem] To improve production efficiency in a machine tool that automatically loads and unloads workpieces.

[Solution] A machining system 100 includes: a machine tool 1 that includes a machining chamber R for machining a workpiece; a first workpiece conveyance mechanism 3 that conveys a workpiece between the outside of the machine tool 1 and the machining chamber R; and a second workpiece conveyance mechanism 5 that is at least partially provided within the machining chamber R and configured to convey a workpiece horizontally within the machining chamber R.

## Description

### [TECHNICAL FIELD]

The present invention relates to a machining system.

### [BACKGROUND ART]

A workpiece conveyance device is known for automatically conveying a workpiece to a machine tool. The workpiece conveyance device removes the workpiece to be machined from a workpiece stocker and attaches it to a workpiece spindle of the machine tool. The workpiece conveyance device also removes the machined workpiece from the workpiece spindle and conveys it to a predetermined position. Such workpiece conveyance devices are disclosed, for example, in Patent Documents 1 and 2.

Patent Document 1 discloses a workpiece conveyance device that conveys a workpiece from the outside of a machine tool to the inside of the machine tool. In this workpiece conveyance device, a gripper that grips the workpiece moves along a rail above the machine tool. The gripper is configured to be movable in the up-down directions as well. The workpiece conveyance device grips the workpiece placed outside the machine tool and conveys the same into the machining chamber of the machine tool. The workpiece conveyance device attaches the workpiece to the workpiece spindle of the machine tool.

Patent Document 2 discloses a workpiece conveyance device that conveys a workpiece inside a machine tool. In the workpiece conveyance device, a gripper that grips the workpiece moves along a rail that is partially provided in the machine tool. The workpiece conveyance device conveys the workpiece between the loading/unloading position positioned outside the machine tool and the machining position where the workpiece is machined, and attaches and detaches the same to and from the workpiece spindle.

### [PRIOR ART DOCUMENTS]

### [PATENT DOCUMENTS]

[Patent Document 1] Japanese Patent Publication No. 6138438
[Patent Document 2] Japanese Patent Publication No. 3943360

### [SUMMARY OF THE INVENTION]

### [PROBLEM TO BE SOLVED]

As disclosed in Patent Documents 1 and 2, there are various workpiece conveyance devices for conveying workpieces into and out of machine tools. On the other hand, machine tools sometimes machine a plurality of workpieces in parallel within a single machining chamber to improve productivity. For example, when a plurality of workpiece spindles that grip workpieces are provided in a single machining chamber, one workpiece may be machined on a first workpiece spindle and another workpiece may be machined on a second workpiece spindle.

Suppose that in such a machine tool, machining of a workpiece is completed on the second workpiece spindle while the workpiece conveyance device is conveying a workpiece to be supplied to the first workpiece spindle. The workpiece conveyance device of Patent Document 1 can convey only one workpiece at a time. Therefore, the workpiece attached to the second workpiece spindle cannot be removed until the workpiece conveyance device has finished attaching the workpiece to the first workpiece spindle. Similarly, the workpiece conveyance device of Patent Document 2 can convey only one workpiece at a time. Thus, it is difficult to increase machine tool productivity with the workpiece conveyance devices of Patent Documents 1 and 2.

The object of the present invention is to improve production efficiency in a machine tool that automatically loads and unloads workpieces.

### [SOLUTION TO PROBLEM]

(1) A machining system of the present invention includes: a machine tool that includes a machining chamber for machining a workpiece; a first workpiece conveyance mechanism that is configured to convey a workpiece between the outside of the machine tool and the machining chamber; and a second workpiece conveyance mechanism that is at least partially provided within the machining chamber and configured to convey a workpiece horizontally within the machining chamber.
   The above machining system is provided with the first workpiece conveyance mechanism and the second workpiece conveyance mechanism which is separate from the first workpiece conveyance mechanism. In this machining system, two workpiece conveyance mechanisms can each independently load a workpiece into the machining chamber of the machine tool, or unload a workpiece from the machining chamber of the machine tool. The above machining system is particularly effective when the machine tool machines a plurality of workpieces in parallel. Therefore, according to the above machining system, production efficiency can be improved in a machine tool that automatically loads and unloads workpieces.
(2) In the machining system of the above (1), the machine tool may include a door which can be opened and closed on the front side of the machining chamber; the first workpiece conveyance mechanism may be configured to convey a workpiece horizontally outside the machining chamber; and the horizontal conveyance pathway for the workpiece conveyance by the second workpiece conveyance mechanism may be set to be parallel at the door side with respect to the horizontal conveyance pathway for the workpiece conveyance by the first workpiece conveyance mechanism.
   In the machining system of the above (2), the first workpiece conveyance mechanism and the second workpiece conveyance mechanism are provided parallel to each other and offset from each other so that their conveyance pathways do not intersect. Therefore, the first workpiece conveyance mechanism and the second workpiece conveyance mechanism are unlikely to cross each other even when running at the same time. Therefore, according to the above machining system, production efficiency can be improved in a machine tool that automatically loads and unloads workpieces. Further, in general, machine tools are provided in factories and the like where a person is present. The first workpiece conveyance mechanism conveys a workpiece outside the machine tool. Therefore, to avoid people from coming into contact with the first workpiece conveyance mechanism or the workpiece being conveyed, the first workpiece conveyance mechanism is often covered by a protective wall. Particularly in machine tools, a door for a person to access a machining chamber and an operation panel for a person to input instructions to the machine tool are often provided on a front surface of the machine tool. Therefore, a protective wall of a sufficient size is often provided in front of the first workpiece conveyance mechanism. In the machining system of the above (2), the horizontal conveyance pathway of the first workpiece conveyance mechanism is provided behind the horizontal conveyance pathway of the second workpiece conveyance mechanism, that is, further away from the door. Therefore, according to the above machining system, the size of the protective wall covering the first workpiece conveyance mechanism can be reduced, and enlargement of the machine tool can be restricted.
(3) The machining system of the above (1) may further include: a first housing unit provided outside the machine tool and configured to store workpieces; and a second housing unit provided inside the machine tool and configured to store workpieces. The first workpiece conveyance mechanism may be configured to convey a workpiece horizontally outside the machine tool, and the second workpiece conveyance mechanism may be configured to convey a workpiece horizontally inside the machine tool.
   Suppose that the machining system has only one workpiece conveyance mechanism. In this case, for example, the workpiece conveyance mechanism conveys a workpiece from a workpiece stocker to the machining chamber. When the machining of the workpiece is completed, the workpiece conveyance mechanism unloads the workpiece from the machining chamber. The workpiece conveyance mechanism then moves to the workpiece stocker to retrieve the next workpiece to be machined. On the other hand, in the machining system of the above (3), for example, in a case where the first workpiece conveyance mechanism loads a workpiece into the machining chamber, the workpiece that has been machined can be unloaded from the machining chamber by the second workpiece conveyance mechanism. Therefore, the first workpiece conveyance mechanism that has finished loading a workpiece into the machining chamber can retrieve the next workpiece to be machined stored in the workpiece stocker for example, without waiting for the machining of that workpiece to be completed. As a result, the period between the completion of machining of a workpiece previously loaded and the start of machining of the next workpiece to be machined can be shortened, compared to a case of using a single workpiece conveyance mechanism to convey workpieces. Further, the second workpiece conveyance mechanism conveys a workpiece inside the machine tool. Therefore, the second workpiece conveyance mechanism can enter the machining chamber more quickly than the first workpiece conveyance mechanism that enters the machining chamber from the outside of the machine tool. Therefore, even when a workpiece is being machined or machining is temporarily stopped, a workpiece can be loaded into and unloaded from the machining chamber more quickly than in a machining system with only the first workpiece conveyance mechanism.
(4) In the machining system of the above (1), the machine tool may further include one or more workpiece spindles provided in the machining chamber, to each of which a workpiece is to be attached; the first workpiece conveyance mechanism may be configured to convey a workpiece to be attached to the workpiece spindles and/or a workpiece removed from the workpiece spindles; and the second workpiece conveyance mechanism may be configured to convey a workpiece to be attached to the workpiece spindle and/or a workpiece removed from the workpiece spindles.
   In the machining system of the above (4), each of the first workpiece conveyance mechanism and the second workpiece conveyance mechanism can perform attachment of a workpiece to the workpiece spindles, removal of a workpiece from the workpiece spindles, or both the attachment and the removal, in addition to the conveyance of a workpiece. Therefore, it is not necessary to provide a separate device for attaching/removing a workpiece to/from the workpiece spindles. Therefore, according to the above machining system, production efficiency can be improved in a machine tool that automatically loads and unloads workpieces.
(5) In the machining system of the above (2), the machine tool may further include: a workpiece headstock provided in the machining chamber and equipped with a workpiece spindle to which a workpiece is to be attached, and a tool post provided above or below the workpiece spindle in the machining chamber, on which a tool to machine the workpiece is to be attached. When the machine tool is viewed from above, the horizontal conveyance pathway for the workpiece conveyance by the first workpiece conveyance mechanism may be set within a machining equipment installation area, where the workpiece headstock and the tool post are arranged, in the machining chamber, and the horizontal conveyance pathway for the workpiece conveyance by the second workpiece conveyance mechanism may be set within an in-machine traveling area between the door and the machining equipment installation area.
   In the machining system of the above (5), the tool post and the workpiece headstock are provided so as to align vertically. Therefore, it is easy to leave space in the machining chamber in a top view. As a result, it is easier to leave space for the second workpiece conveyance mechanism that is at least partially provided within the machining chamber.
(6) In the machining system of the above (1), the first workpiece conveyance mechanism may include a first gripper configured to grip a workpiece, a first horizontal movement mechanism configured to move the first gripper horizontally, and a first up-down movement mechanism configured to move the first gripper in an up-down direction; and the first horizontal movement mechanism may include the first travel rail provided above the machining chamber and extending horizontally, and be configured to move the first gripper along the first travel rail.
   According to the machining system of the above (6), the first workpiece conveyance mechanism can pass above the machining chamber and convey a workpiece into the machining chamber through the top of the machining chamber.
(7) In the machining system of the above (1), the machine tool may further include a cover that forms the machining chamber; the cover may include a shutter that is provided on a top surface of the machining chamber and can be opened and closed; and the first workpiece conveyance mechanism may be configured to convey a workpiece between the outside of the machine tool and the machining chamber through the shutter.
   According to the machining system of the above (7), by opening the shutter, the first workpiece conveyance mechanism can convey a workpiece into the machining chamber or convey a workpiece from the machining chamber. Further, by closing the shutter, it is possible to suppress scattering of machining chips and leakage of coolant to the outside of the machining chamber while machining of a workpiece is being performed in the machining chamber.
(8) In the machining system of the above (1), the machine tool may further include a workpiece spindle provided in the machining chamber, to which a workpiece is to be attached, and a cover that forms the machining chamber; the cover may include a door that is provided on a front surface of the machining chamber and can be opened and closed; the second workpiece conveyance mechanism may include a second gripper configured to grip a workpiece, and a second horizontal movement mechanism configured to move the second gripper horizontally; and the second horizontal movement mechanism may include the second travel rail at least partially provided behind the door and in front of the workpiece spindle in the machining chamber and extending horizontally, and be configured to move the second gripper along the second travel rail.
   In general, the travel rail in the workpiece conveyance mechanism is a long and large member. The workpiece spindle (together with the workpiece headstock) is also a large member and is often provided near the center of the machining chamber. If the travel rail is provided above the workpiece spindle (near the center of the machining chamber), the second gripper moving along the travel rail is likely to interfere with the workpiece spindle. On the other hand, in the machining system of the above (8), the second travel rail is provided in the front area of the machining chamber. In other words, the second travel rail is provided so as to effectively utilize the space in the machining chamber while avoiding interference between the second gripper, which is a moving object, and the workpiece spindle.
(9) In the machining system of the above (8), the second workpiece conveyance mechanism may further include an arm that is supported by the second travel rail and extends in an up-down direction; and the arm may include a gripper side end to which the second gripper is attached, and a travel rail side end that is closer to the second travel rail than the gripper side end and includes a fulcrum serving as the rotation center of the arm.
   Suppose the arm is configured to move up and down. In this case, to attach/remove a workpiece to/from the workpiece spindle with the second gripper, it is necessary for the second gripper to move to a position above the workpiece spindle. However, as described above, in terms of the space in the machining chamber, it is difficult to arrange the second travel rail above the workpiece spindle. On the other hand, in the machining system of the above (9), the arm and gripper are configured as a pendulum type that rotates around the fulcrum. Therefore, even though the second travel rail is not provided above the workpiece spindle, the second gripper can attach/remove a workpiece to/from the workpiece spindle.
(10) In the machining system of the above (1), the first workpiece conveyance mechanism may include a first gripper configured to grip a workpiece, and a first horizontal movement mechanism configured to move the first gripper horizontally; the first horizontal movement mechanism may include the first travel rail provided above the machining chamber and extend horizontally, and be configured to move the first gripper along the first travel rail. The second workpiece conveyance mechanism may include a second gripper configured to grip a workpiece, and a second horizontal movement mechanism configured to move the second gripper horizontally; the second horizontal movement mechanism may include the second travel rail at least partially provided within the machining chamber and extend horizontally, and be configured to move the second gripper along the second travel rail; and at least a part of the second travel rail may be provided in front of the first travel rail.
   In the machining system of the above (10), the first travel rail is provided behind at least part of the second travel rail. That is, the first workpiece conveyance mechanism conveying a workpiece outside the machine tool is provided at a position away from the front surface of the machine tool. Therefore, according to the above machining system, the size of the protective wall covering the first workpiece conveyance mechanism can be reduced, and enlargement of the machine tool can be restricted.
(11) In the machining system of the above (1), the machine tool may further include a workpiece spindle provided in the machining chamber, to which a workpiece is to be attached, and a controller configured to control operations of the workpiece spindle, the first workpiece conveyance mechanism, and the second workpiece conveyance mechanism; and the controller may be configured to execute the following processes (A) and/or (B).
   (A) A process of the first workpiece conveyance mechanism conveying a workpiece placed on the outside of the machine tool into the machining chamber and attaching the workpiece to the workpiece spindle, and/or a process of the first workpiece conveyance mechanism removing a workpiece attached to the workpiece spindle in the machining chamber and conveying the workpiece to the outside of the machine tool.
   (B) A process of the second workpiece conveyance mechanism conveying a workpiece within the machining chamber and attaching the workpiece to the workpiece spindle, and/or a process of removing a workpiece attached to the workpiece spindle and conveying the workpiece within the machining chamber.

### [ADVANTAGEOUS EFFECT OF THE INVENTION]

According to a machine tool of the present invention, production efficiency can be improved in a machine tool that automatically loads and unloads workpieces.

### [BRIEF DESCRIPTION OF THE DRAWINGS]

[FIG. 1] Fig.1 is a front view of a machining system of the present embodiment.
[FIG. 2] Fig.2 is a front view of the machining system of Fig.1, with a door of a machine tool removed to show the inside of a machining chamber.
[FIG. 3] Fig.3 is a cross-sectional view taken along line **III-III** in Fig.1.
[FIG. 4] Fig.4 is a cross-sectional view taken along line IV-IV in Fig.1.
[FIG. 5] Fig. 5 is a right side view of an arm in a second workpiece conveyance mechanism of the present embodiment.

### [DETAILED DESCRIPTION]

Particular embodiments of the present invention will be described below with reference to the drawings.

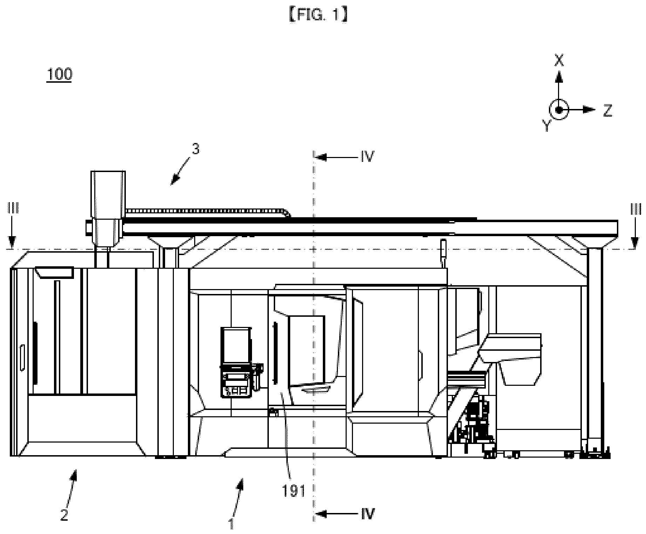

Fig.1 is a front view of a machining system of the present embodiment. The machining system 100 includes a machine tool 1, a first housing unit 2, and a first workpiece conveyance mechanism 3.

The machine tool 1 is a machine that machines workpieces. The workpiece has a cylindrical shape, for example. The machine tool 1 is a multi-tasking machine tool with turning and milling functions. The machine tool 1 may have only a turning function or only a milling function. The machine tool 1 may be a machine that can perform not only removal processes but also additive processes, for example. The machine tool 1 is not particularly limited, as long as the first and second workpiece conveyance mechanisms described below can be applied.

The machine tool 1 is set up on the floor of a facility such as a factory. In this state, the machine tool 1 includes a door 191 which can be opened and closed at the front. The door 191 constitutes a part of the exterior of the machine tool 1. The door 191, at the front of the machine tool 1, connects and disconnects a machining chamber, where a workpiece is machined, to and from the outside of the machine tool. The door 191 is configured to allow loading of a workpiece into the machining chamber and unloading of a workpiece from the machining chamber through the front of the machine tool 1.

The front of the machine tool 1 refers to the side of the machine tool 1 on which the door 191 is provided, and is also referred to as the front surface. The rear surface of the machine tool 1 refers to the surface on the opposite side of the front of the machine tool 1. In the machine tool 1, the front direction refers to a direction from the rear surface to the front surface, and the rear direction refers to the direction from the front surface to the rear surface. In the machine tool 1, the left direction refers to a direction toward the left of the machine tool 1 in the front view, and the right direction refers to a direction toward the right of the machine tool 1 in the front view. In the machine tool 1, the up direction refers to a direction to the top (ceiling) of the machine tool 1, and the down direction refers to a direction to the bottom (floor) of the machine tool 1. Hereafter, the up-down directions in the machine tool 1 is also referred to as the X direction, the front-rear direction as the Y direction, and the left-right direction as the Z direction.

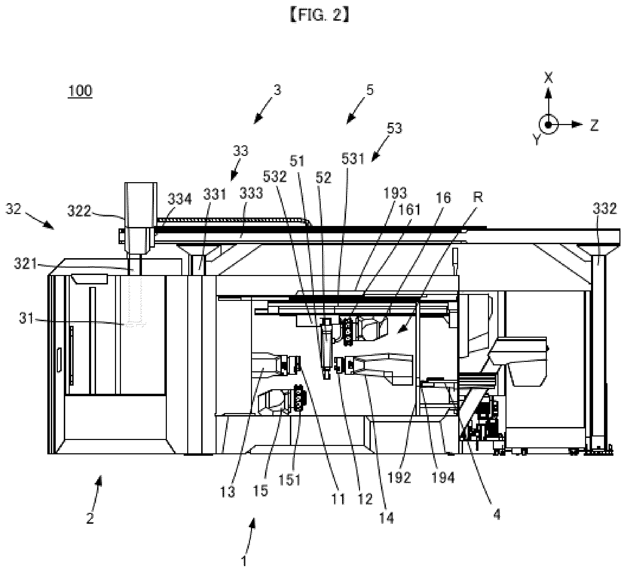

Fig.2 is a front view of the machining system of Fig.1, showing the inside of the machining chamber by removing the door of the machine tool. The machine tool 1 includes the machining chamber R, workpiece spindles 11, 12, workpiece headstocks 13, 14, and tool posts 15, 16.

The machining chamber R is formed by a cover 192. The cover 192 is also referred to as a splash guard. The cover 192 keeps machining chips, coolant, and the like produced in the machining chamber R from being scattered or leaked to the outside. The cover 192 is formed by a plurality of members. The cover 192 forms a substantially rectangular-shaped machining chamber R. At least part of the front surface of the cover 192 is formed by the door 191 (see Fig.1).

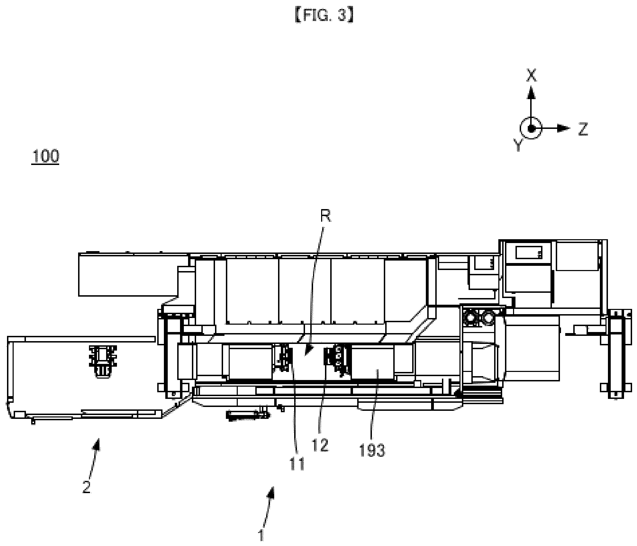

The cover 192 includes a first shutter 193 which can be opened and closed on the top surface of the cover 192. The first shutter 193, at the top surface of the machining chamber R, connects and disconnects the inside and outside of the machining chamber. With the first shutter 193 open, the right end of the open surface of the machining chamber top surface is located to the right of the workpiece spindles 11, 12 in the Z direction (see Fig.3). With the first shutter 193 open, the left end of the open surface of the machining chamber top surface is located to the left of the workpiece spindles 11, 12 in the Z direction.

The cover 192 includes a second shutter 194 which can be opened and closed on the right side surface of the cover 192. The second shutter 194, at the right side surface of the machining chamber R, connects and disconnects the inside and outside of the machining chamber. The second shutter 194 is provided so that it is located in front of the workpiece spindles 11, 12 in the Y direction.

The workpiece spindles 11, 12 are provided within the machining chamber R. The workpiece spindle 11 is provided to the left of the workpiece spindle 12. The workpiece spindles 11, 12 each include a chuck that grips a workpiece (not shown). By gripping the workpiece with the chuck, the workpiece is attached to each workpiece spindle 11, 12. The workpiece spindles 11, 12 each support the workpiece so that the central axis of the workpiece is parallel to the Z direction. The workpiece spindle 11 is provided so that its rotation axis is aligned with the rotation axis of the workpiece spindle 12. The workpiece spindles 11, 12 are each configured to rotate the workpiece around an axis parallel to the Z direction. The workpiece spindle 11 can rotate in sync with the workpiece spindle 12 or rotate independently. The workpiece spindles 11, 12 may grip separate workpieces or the same workpiece.

The workpiece headstocks 13, 14 are provided within the machining chamber R. The workpiece headstocks 13, 14 each have an enclosure shape. The workpiece spindle 11 is attached to the workpiece headstock 13. The workpiece headstock 13 houses a drive device and the like configured to rotationally drive the workpiece spindle 11. The workpiece spindle 12 is attached to the workpiece headstock 14. The workpiece headstock 14 houses a drive device and the like configured to rotationally drive the workpiece spindle 12.

The workpiece headstocks 13, 14 are each supported by a bed provided behind the rear surface of the machining chamber R. The present embodiment describes a configuration in which the machine tool 1 includes two workpiece headstocks 13, 14, but the machine tool 1 may have a configuration that includes one workpiece headstock. In short, the machine tool 1 only needs to be configured to include at least one workpiece headstock.

The tool posts 15, 16 are provided within the machining chamber R. Tools for machining workpieces are attached to the tool posts 15, 16. More specifically, the tool posts 15, 16 include turrets 151, 161, respectively. Each of the turrets 151, 161 includes a plurality of tool holders. To each tool holder, a corresponding tool is attached. The tool posts 15, 16 each have an enclosure shape. The tool posts 15, 16 house a drive device and the like configured to rotationally drive turrets 151, 161, respectively. The tool posts 15, 16 are configured to switch the tool used, by driving the turrets 151, 161, respectively.

The tool post 15 is provided to the left of the tool post 16. The tool post 15 is provided below the workpiece headstocks 13, 14. The tool post 15 is provided below the rotation axes of the workpiece spindles 11, 12. The tool post 16 is provided above the workpiece headstocks 13, 14. The tool post 16 is provided above the rotation axes of the workpiece spindles 11, 12.

The tool posts 15, 16 are each supported by the bed provided behind the rear surface of the machining chamber R. The tool posts 15, 16 are each configured to be movable in the X, Y, and Z directions. Further, the tool posts 15, 16 are each configured to rotate around an axis (also referred to as B axis) parallel to the Y direction. The present embodiment describes a configuration in which the machine tool 1 includes two tool posts 15, 16, but the machine tool 1 may have a configuration that includes one tool post. In short, the machine tool 1 only needs to be configured to include at least one tool post.

Not that, while illustration is omitted, the bed is a standing bed provided behind the rear surface of the machining chamber R. The bed includes a plurality of support members supporting the respective ones of the workpiece headstocks 13, 14 and tool posts 15, 16. Each support member includes a support surface to which the respective member (workpiece headstocks 13, 14, tool posts 15, 16) is attached. The normal direction of each support surface is directed in a horizontal direction (X direction in the present embodiment). The bed also includes support legs connecting to the respective support members. Each support leg extends in a horizontal direction (X direction in the present embodiment). In short, the bed supports the workpiece headstocks 13, 14 and the tool posts 15, 16 from a side.

The first housing unit 2 is provided outside the machine tool 1. The first housing unit 2 is provided adjacent to the machine tool 1. The first housing unit 2 is provided to the left of the machine tool 1. The first housing unit 2 may be connected to or separate from the machine tool 1. The first housing unit 2 has an enclosure shape. The top surface of the first housing unit 2 is open. In the present embodiment, the first housing unit 2 stores a plurality of workpieces prior to machining. However, the first housing unit 2 may store a plurality of machined workpieces. In short, the first housing unit 2 may function as a workpiece stocker, a workpiece delivery device, or both. The first housing unit 2 only needs to be configured to store workpieces, and the configuration thereof is not particularly limited.

The first workpiece conveyance mechanism 3 conveys a workpiece between the first housing unit 2 and the machining chamber R. That is, the first workpiece conveyance mechanism 3 conveys a workpiece between the outside and inside of the machine tool 1. The first workpiece conveyance mechanism 3 retrieves a workpiece stored in the first housing unit 2 and conveys the workpiece into the machining chamber R. The first workpiece conveyance mechanism 3 passes the workpiece to the workpiece spindles 11, 12. The first workpiece conveyance mechanism 3 may pass the workpiece to at least one of the workpiece spindles 11, 12. The first workpiece conveyance mechanism 3 may also receive workpieces attached to at least one of the workpiece spindles 11, 12. The first workpiece conveyance mechanism 3 may convey the received workpiece s to the first housing unit 2. In short, the first workpiece conveyance mechanism 3 may convey a workpiece to be attached to the workpiece spindles, or may convey a workpiece removed from the workpiece spindles, or may perform both.

The first workpiece conveyance mechanism 3 will be described in further detail. The first workpiece conveyance mechanism 3 includes a first gripper 31, a first up-down movement mechanism 32, and a first horizontal movement mechanism 33.

The first gripper 31 grips a workpiece to be loaded into the first housing unit 2 and/or a workpiece to be unloaded from the first housing unit 2. The first gripper 31 has a plurality of chuck-type jaws. The first gripper 31 grips the workpiece by the plurality of jaws. The first gripper 31 is configured to rotate around an axis (B axis) parallel to the Y direction by a drive device (not shown). However, the configuration of the first gripper 31 is not limited to this. The first gripper 31 only needs to be configured to grip and convey a workpiece. The first gripper 31 is attached to the lower end of the first up-down movement mechanism 32.

The first up-down movement mechanism 32 includes an up-down movement arm 321 and a drive device 322. The up-down movement arm 321 extends in the X direction. The drive device 322 moves the up-down movement arm 321 in the X direction. The first up-down movement mechanism 32 moves the first gripper 31 in the X direction. The first up-down movement mechanism 32 is configured to allow the first gripper 31, while gripping a workpiece, to be moved at least above the top surface of the machining chamber R (the top surface of the cover 192). The first up-down movement mechanism 32 is configured to allow the first gripper 31, while gripping the workpiece, to be moved in the X direction to at least the position of the rotation axes of the workpiece spindles 11, 12. The first up-down movement mechanism 32 is configured to allow the first gripper 31 to be moved, in the X direction, to at least the position of the workpiece stored in the first housing unit 2 or to the position where the workpiece is to be stored into the first housing unit 2.

The first horizontal movement mechanism 33 moves the first gripper 31 along a first travel rail 333. The first horizontal movement mechanism 33 is configured to allow the first gripper 31 to be moved, in the Z direction, to at least the position of the workpiece stored in the first housing unit 2 or the position where the workpiece is to be stored into the first housing unit 2. The first horizontal movement mechanism 33 is configured to allow the first gripper 31 to be moved in the Z direction to at least the position of the first shutter 193. More specifically, the first horizontal movement mechanism 33 includes columns 331, 332, the first travel rail 333, and a first traveling base 334.

The columns 331, 332 are provided on an installation surface of the machine tool 1. The columns 331, 332 extend in the X direction. The column 331 is provided to the left of the machining chamber R (machine tool 1) and the column 332 is provided to the right of the machining chamber R (machine tool 1). The columns 331, 332 support the first travel rail 333.

The first travel rail 333 is attached to the upper end of each of the columns 331, 332. The first travel rail 333 is provided to connect the column 331 to the column 332. The first travel rail 333 extends in the Z direction. The first travel rail 333 forms the horizontal conveyance pathway for the workpiece conveyance by the first workpiece conveyance mechanism 3. The first travel rail 333 is provided above the machining chamber R (machine tool 1). The first traveling base 334 is attached to the first travel rail 333.

The first traveling base 334 is configured to move along the first travel rail 333. That is, the first traveling base 334, together with the first travel rail 333, configure a linear slider. The linear slider may be mechanical or magnetic and is not particularly limited. The first traveling base 334 supports the first up-down movement mechanism 32.

In this configuration, the first workpiece conveyance mechanism 3 moves the first gripper 31 in the X and Z directions to convey the workpiece between the first housing unit 2 and the machining chamber R.

The machining system 100 further includes a second housing unit 4 and a second workpiece conveyance mechanism 5.

The second housing unit 4 is provided inside the machine tool 1. The second housing unit 4 is provided outside the cover 192. The second housing unit 4 is provided to the right of the machining chamber R. The second housing unit 4 is provided to the right of the second shutter 194. In the present embodiment, the second housing unit 4 unloads machined workpieces. The second housing unit 4 may include a conveyor to unload workpiece s, a bucket to collect the workpieces, and the like. However, the second housing unit 4 may store a plurality of workpieces prior to machining. In short, the second housing unit 4 may function as a workpiece delivery device, a workpiece stocker, or both.

The second workpiece conveyance mechanism 5 conveys workpieces between the second housing unit 4 and the machining chamber R. That is, the second workpiece conveyance mechanism 5 conveys workpieces within the machine tool 1. The second workpiece conveyance mechanism 5 receives workpieces attached to at least one of the workpiece spindles 11, 12. The second workpiece conveyance mechanism 5 conveys the received workpieces to the second housing unit 4. The second workpiece conveyance mechanism 5 may convey workpieces stored in the second housing unit 4 into the machining chamber R. The second workpiece conveyance mechanism 5 may pass workpieces to at least one of the workpiece spindles 11, 12. In short, the second workpiece conveyance mechanism 5 may convey workpieces that have been removed from the workpiece spindles, may convey workpieces to be attached to the workpiece spindles, or may perform both.

The second workpiece conveyance mechanism 5 will be described in further detail. The second workpiece conveyance mechanism 5 includes a second gripper 51, a rotating mechanism 52, and a second horizontal movement mechanism 53.

The second gripper 51 grips a workpiece to be loaded into the second housing unit 4 and/or a workpiece to be unloaded from the second housing unit 4. The second gripper 51 has two jaws that can be brought close together and away from each other. The second gripper 51 grips a workpiece by the two jaws. However, the configuration of the second gripper 51 is not limited to this. The second gripper 51 only needs to be configured to grip and convey a workpiece.

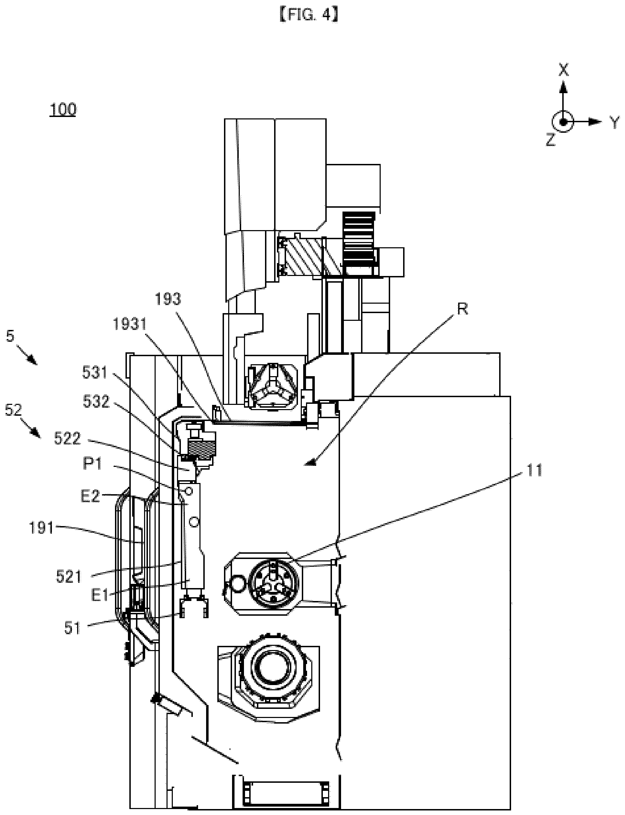

Fig.4 is a cross-sectional view taken along the line IV-IV in Fig.1. The rotating mechanism 52 rotates the second gripper 51 around an axis parallel to the Z direction. The rotating mechanism 52 includes an arm 521 and a drive device 522.

The arm 521 extends in the X direction. The arm 521 includes a gripper side end E1 and a travel rail side end E2. The gripper side end E1 corresponds to the lower end of the arm 521. The gripper side end E1 is positioned below the center of the arm 521 in the X direction. The second gripper 51 is attached to the gripper side end E1. The travel rail side end E2 corresponds to the upper end of the arm 521. The travel rail side end E2 is positioned above the center of the arm 521 in the X direction. The travel rail side end E2 is closer to a second travel rail 531 than the gripper side end E1. A fulcrum P1, which is the rotation center of the arm 521, is provided at the travel rail side end E2. The fulcrum P1 is defined by a hole with a central axis parallel to the Z direction. The arm 521 is configured to rotate around the fulcrum P1, i.e., around an axis parallel to the Z direction.

A basic posture of the second workpiece conveyance mechanism 5 is such that the arm 521 is parallel to the X direction. Hereinafter, the basic posture is referred to as a traveling posture. The arm 521 is configured so that its longitudinal direction is the X direction in the traveling posture. In the traveling posture, the length of the arm 521 in the X direction is longer than its length in the Y direction. In the traveling posture, the length of the arm 521 in the X direction is longer than its length in the Z direction. The length of the arm 521 in the direction from the gripper side end E1 to the travel rail side end E2 is longer than the lengths in two directions (Y and Z directions in the figure) perpendicular to the direction from gripper side end E1 to the travel rail side end E2. In the traveling posture, the length of the arm 521 in the Y direction is shorter than the distance in the Y direction between the rotation axis of the workpiece spindle 11 and the front surface of the machining chamber R. In the traveling posture, the length of the arm 521 in the Y direction is shorter than the distance in the Y direction between a front edge 1931 of the first shutter 193 and the front surface of the machining chamber R. The arm 521 is configured so that at least a part of the second gripper 51 is positioned below the rotation axis of the workpiece spindle 11 in the traveling posture.

The drive device 522 is connected to the travel rail side end E2 of the arm 521. The drive device 522 is, for example, a servo motor, but is not particularly limited. The drive device 522 rotates the arm 521 around the fulcrum P1. With such a configuration, the rotating mechanism 52 rotates the second gripper 51 around the axis parallel to the Z direction. The rotating mechanism 52 is configured to rotate the second gripper 51 to at least the position where the center of the second gripper 51 (the intermediate position of the two jaws) coincides with the rotation axis of the workpiece spindle 11 in the side view.

Referring to FIG.2, the second horizontal movement mechanism 53 moves the second gripper 51 horizontally. The second horizontal movement mechanism 53 includes the second travel rail 531 and a second traveling base 532.

The second travel rail 531 extends in the Z direction. The second travel rail 531 forms the horizontal conveyance pathway for the workpiece conveyance by the second workpiece conveyance mechanism 5. A part of the second travel rail 531 is provided within the machining chamber R. A left end of the second travel rail 531 is provided within the machining chamber R. A right end of the second travel rail 531 is provided outside the machining chamber R. The second travel rail 531 penetrates the right side surface of the machining chamber R. The second travel rail 531 is at least partially attached to the top surface of the machining chamber R. The second travel rail 531 is provided above the rotation axes of the workpiece spindles 11, 12. The second travel rail 531 is provided above the turrets 151, 161 of the tool posts 15, 16. The second travel rail 531 is provided below the top surface of the cover 192. The second travel rail 531 is provided below the first travel rail 333. The second travel rail 531 is parallel to the first travel rail 333.

Referring to FIG.4, the second travel rail 531 is provided in an in-machine traveling area between the door 191 and a machining equipment installation area. The machining equipment installation area is a space in the machining chamber where the workpiece spindles 11, 12 and tool posts 15, 16 are provided. The in-machine traveling area is a space in front of the machining equipment installation area in the machining chamber. The second travel rail 531 is provided behind the door 191. The second travel rail 531 is provided in front of the workpiece spindle 11. The second travel rail 531 is provided in front of the rotation axis of the workpiece spindle 11. At least part of the second travel rail 531 is provided in front of the front edge 1931 of the first shutter 193. The second traveling base 532 is attached to the second travel rail 531.

The second traveling base 532 is configured to move along the second travel rail 531. That is, the second traveling base 532, together with the second travel rail 531, configure a linear slider. The linear slider may be mechanical or magnetic and is not particularly limited. The second traveling base 532 supports the rotating mechanism 52.

With such a configuration, the second horizontal movement mechanism 53 moves the second gripper 51 along the second travel rail 531. In other words, the second horizontal movement mechanism 53 moves the second gripper 51 in the Z direction. The second horizontal movement mechanism 53 is configured to allow the first gripper 31 to be moved, in the Z direction, to at least the position of the workpiece stored in the second housing unit 4 or the position where the workpiece is to be stored into the second housing unit 4. The second horizontal movement mechanism 53 is configured to allow the second gripper 51 to be moved in the X-Y plane to at least the position of the workpiece spindle 11.

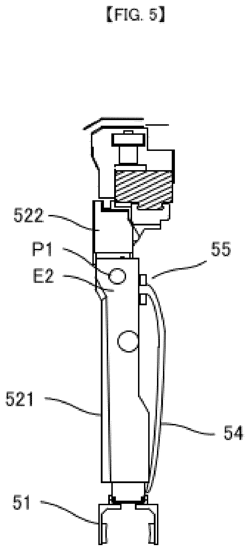

Fig.5 is a right side view of the arm in the second workpiece conveyance mechanism of the present embodiment. To the second gripper 51, a tube that passes fluid (e.g., air) to activate the jaws, a lead wire of a proximity switch that detects the presence or absence of a workpiece, and the like are connected. These cables 54 extend in the X direction from the second gripper 51 and enter the interior of the arm 521 from the travel rail side end E2 of the arm 521. On the other hand, the arm 521 rotates around an axis parallel to a Z axis with the fulcrum P1 as the center. Therefore, at the entry point where the cables 54 enter the interior of the arm 521, the cables 54 tends to rub against the edge of the entry point. The arm 521 includes a bearing 55 provided at the entry point for the cables 54. The bearing 55 supports the cables 54. This suppresses the cables 54 from rubbing against the edge of the entry point even if the arm 521 rotates.

Referring to FIG.2, the machine tool 1 further includes a controller (not shown). The controller controls the operation of the workpiece spindles 11, 12, the tool posts 15, 16, the first workpiece conveyance mechanism 3, and the second workpiece conveyance mechanism 5. The controller is configured by a computer including CPU, RAM, ROM, and the like. The controller controls the operation of each configuration by executing a computer program stored in a recording medium.

Subsequently, the conveyance of workpieces by the machining system of the present embodiment is described. First, the conveyance of a workpiece by the first workpiece conveyance mechanism 3 is described. The controller instructs the first workpiece conveyance mechanism 3 to convey a workpiece stored in the first housing unit to the machining chamber R based on an input from the operator or a computer program stored in advance. The first workpiece conveyance mechanism 3 receives instructions from the controller and grips a workpiece stored in the first housing unit 2. The first workpiece conveyance mechanism 3 then moves the workpiece in the X direction and lifts it above the top surface of the cover 192. The first workpiece conveyance mechanism 3 then conveys the workpiece in the Z direction to the top of the first shutter 193. At this time, the workpiece is located to the right of the workpiece spindle 11 to which it is to be attached. The controller then instructs the machine tool 1 to open the first shutter 193. The timing for opening and closing the first shutter 193 is not limited and may occur while the first workpi ece conveyance mechanism is conveying a workpiece. The first workpiece conveyance mechanism 3 then lowers the workpiece and conveys it into the machining chamber R through the first shutter 193. The first workpiece conveyance mechanism 3 stops lowering the workpiece when the position of the workpiece in the Z direction coincides with the workpiece spindle 11. The first workpiece conveyance mechanism 3 then moves the workpiece in the Z direction (the direction toward the workpiece spindle 11) and attaches it to the workpiece spindle 11. The same applies to the case where the workpiece is attached to the workpiece spindle 12 by the first workpiece conveyance mechanism 3. When the workpiece is removed from the workpiece spindle 11 and conveyed to the first housing unit, the above description is reversed.

Next, the conveyance of a workpiece by the second workpiece conveyance mechanism 5 is described. Here, it is assumed that the second gripper 51 is initially positioned outside the machining chamber R (the arm 521 is at the right end of the second travel rail 531). The controller instructs the second workpiece conveyance mechanism 5 to convey the workpiece attached to the workpiece spindle 11 to the second housing unit 4 based on an input from the operator or a computer program stored in advance. The controller also instructs the machine tool to open the second shutter 194 on the right side surface of the machining chamber R. The second workpiece conveyance mechanism 5 receives instructions from the controller and moves the second gripper 51, in the traveling posture, in the Z direction. The second workpiece conveyance mechanism 5 stops at a position to the right of the workpiece attached to the workpiece spindle 11. The second workpiece conveyance mechanism 5 then rotates the arm 521 and second gripper 51 around an axis parallel to the Z direction. The second workpiece conveyance mechanism 5 stops rotating the arm 521 and second gripper 51 when the second gripper 51 is located to the right of the workpiece in the Z direction. The second workpiece conveyance mechanism 5 moves the arm 521 and second gripper 51 in the Z direction (the direction toward the workpiece) to grip the workpiece. Next, the second workpiece conveyance mechanism 5 moves the arm 521 and second gripper 51 in the Z direction (the direction away from the workpiece spindle 11) to remove the workpiece from the workpiece spindle 11. Next, the second workpiece conveyance mechanism 5 rotates the arm 521 and the second gripper 51 around an axis parallel to the Z direction to put them in the traveling posture. Next, the second workpiece conveyance mechanism 5 moves the workpiece in the Z direction, passes it through the second shutter 194, and stores it in the second housing unit 4. The same applies to the case where the workpiece is removed from the workpiece spindle 12 by the second workpiece conveyance mechanism 5. When the workpiece is removed from the second housing unit 4 and attached to the workpiece spindle 11, the above description is reversed.

As described above, the machining system 100 of the present embodiment is provided with the first workpiece conveyance mechanism 3 and the second workpiece conveyance mechanism 5 which is separate from the first workpiece conveyance mechanism. The first workpiece conveyance mechanism 3 can, independently of the second workpiece conveyance mechanism 5, load a workpiece into the machining chamber R of the machine tool 1 or unload a workpiece from the machining chamber R of the machine tool 1. For example, suppose the first workpiece conveyance mechanism 3 moves to the first housing unit 2 to retrieve the next workpiece to be machined while the workpiece spindle 11 is machining a workpiece. If the machining of the workpiece is completed at the workpiece spindle 11 while the first workpiece conveyance mechanism 3 is moving, the second workpiece conveyance mechanism 5 can convey the machined workpiece out to the second housing unit 4. Therefore, the first workpiece conveyance mechanism 3 can convey the next workpiece to be machined without waiting for the completion of the machining of that workpiece.

When the first workpiece conveyance mechanism 3 conveys a workpiece to the machining chamber R, the first shutter 193, which connects the inside of the machine tool 1 to the outside, is opened. In this case, the workpiece spindles 11, 12 stop machining to avoid scattering of machining chips out of the machine. On the other hand, the second workpiece conveyance mechanism 5 is provided in the machine tool 1. Therefore, even if the second shutter 194 is opened, machining chips are unlikely to be scattered out of the machine. The second workpiece conveyance mechanism 5 can convey a workpiece even when the workpiece spindles 11, 12 are in operation. For example, assume that the workpiece spindles 11, 12 are each machining a separate workpiece. When the machining of the workpiece is completed at the workpiece spindle 11, it is not necessary to stop the workpiece spindle 12, which is still machining the workpiece, if the second workpiece conveyance mechanism 5 moves to retrieve the machined workpiece. Meanwhile, the first workpiece conveyance mechanism 3 can move to the first housing unit 2 to retrieve the next workpiece to be machined.

Thus, according to the machining system 100 of the present embodiment, the period during which a workpiece is not machined in the machining chamber R can be reduced by various combination of instructions to the first workpiece conveyance mechanism 3 and instructions to the second workpiece conveyance mechanism 5. Therefore, according to the machining system 100, production efficiency can be improved in a machine tool that automatically loads and unloads workpieces.

Furthermore, when the first workpiece conveyance mechanism 3 that enters the machine from the outside of the machine and the second workpiece conveyance mechanism 5 that travels in the machine coexist, it is likely that the first workpiece conveyance mechanism 3, the second workpiece conveyance mechanism 5, the workpiece headstocks 13, 14, and the tool posts 15, 16 interfere in the machining chamber R. In contrast, in the machining system 100 of the present embodiment, the bed that supports the workpiece headstocks 13, 14 and tool posts 15, 16 are provided outside the machining chamber R. The workpiece headstocks 13, 14 and tool posts 15, 16 are aligned in the X direction, i.e., vertically aligned. This way, a space can be freed up for the second workpiece conveyance mechanism 5 traveling inside the machine tool 1, and even if the first workpiece conveyance mechanism 3 and the second workpiece conveyance mechanism 5 coexist, interference is unlikely to occur.

Further, the workpiece headstocks 13, 14 and tool posts 15, 16 are vertically aligned behind the center of the machining chamber R in the Y direction, thereby freeing up the front area of the machining chamber R. The second workpiece conveyance mechanism 5 is configured to be longitudinal (have its longitudinal direction in the X direction) in the traveling posture. Further, the second workpiece conveyance mechanism 5 attaches and removes a workpiece to the workpiece spindles 11, 12 with the pendulum-type arm 521 and second gripper 51. This way, the free front area of the machining chamber R can be utilized, and the first workpiece conveyance mechanism 3 and the second workpiece conveyance mechanism 5 can coexist without enlarging the machining chamber and, thus, without enlarging the machine tool.

The foregoing description of the embodiments is illustrative in all respects and is not intended to be limiting. Modifications and variations can be made as appropriate by a person skilled in the art. The scope of the present invention is indicated by the claims, not by the embodiments described above. Further, the scope of the present invention encompasses modifications of the embodiments that fall within a scope equivalent to the claims.

For example, in the above described embodiment, the first travel rail 333 and the second travel rail 531 are configured to extend in the Z direction. However, the first travel rail 333 and the second travel rail 531 may each be configured to extend in the Y direction, or may extend obliquely with respect to the Y direction and the Z direction in the Y-Z plane. In short, the first travel rail 333 and the second travel rail 531 only need to extend horizontally.

For example, the above embodiment described a configuration in which the first housing unit 2 is provided on the left side of the machine tool 1 and the second housing unit 4 is provided at the right end of the machine tool 1. However, the arrangement of them may be reversed left to right.

For example, the above embodiment described a configuration in which the second housing unit 4 is provided inside the machine tool 1 (inside the side of the machine tool). However, the second housing unit 4 may be provided outside the machine tool 1 (outside the side of the machine tool). Further, the above embodiment described a configuration in which the second housing unit 4 is provided outside the machining chamber R. However, the second housing unit 4 may be provided inside the machining chamber R. In this case, the second shutter 194 that separates the machining chamber R from the second housing unit 4 does not have to be provided.

For example, the above embodiment described a configuration in which the first workpiece conveyance mechanism 3 loads or unloads a workpiece from the top of the machining chamber R. However, the first workpiece conveyance mechanism 3 may load a workpiece into or unload a workpiece from the side of the machining chamber R, for example. In this case, the first shutter 193 is provided on the side of the machining chamber R. The first workpiece conveyance mechanism 3 loads a workpiece into or unload a workpiece from the machining chamber R without lifting it above the machining chamber R.

### [LISTING OF REFERENCE CHARACTERS]

- 100:: Machining System
- 1:: Machine Tool
- 11, 12:: Workpiece Spindle
- 13, 14:: Workpiece Headstock
- 15, 16:: Tool Post
- 151, 161:: Turret
- 191:: Door
- 192:: Cover
- 193:: First Shutter
- 194:: Second Shutter
- 2:: First Housing Unit
- 3:: First Workpiece Conveyance Mechanism
- 31:: First Gripper
- 32:: First Up-Down Movement Mechanism
- 321:: Up-Down Movement Arm
- 322:: Drive Device
- 33:: First Horizontal Movement Mechanism
- 331, 332:: Column
- 333:: First Travel Rail
- 334:: First Traveling Base
- 4:: Second Housing Unit
- 5:: Second Workpiece Conveyance Mechanism
- 51:: Second Gripper
- 52:: Rotating Mechanism
- 521:: Arm
- 522:: Drive Device
- 53:: Second Horizontal Movement Mechanism
- 531:: Second Travel Rail
- 532:: Second Traveling Base
- 54:: Cable
- 55:: Bearing
- E1:: Gripper Side End
- E2:: Travel Rail Side End
- P1:: Fulcrum
- R:: Machining Chamber

## Claims

1. A machining system comprising:
a machine tool that includes a machining chamber for machining a workpiece;
a first workpiece conveyance mechanism that is configured to convey a workpiece between outside of the machine tool and the machining chamber; and
a second workpiece conveyance mechanism that is at least partially provided within the machining chamber and is configured to convey a workpiece horizontally within the machining chamber,
wherein the first workpiece conveyance mechanism includes a first travel rail provided above the machining chamber and extending horizontally, and is configured to convey a workpiece along the first travel rail above the machining chamber, and
wherein the second workpiece conveyance mechanism includes a second travel rail provided below the first travel rail, at least partially provided within the machining chamber, and extending horizontally, and is configured to convey a workpiece along the second travel rail within the machining chamber.

2. The machining system of claim 1, wherein:
the machine tool includes a door which can be opened and closed on a front side of the machining chamber; and
the second travel rail is provided closer to the door than the first travel rail and is set parallel to the first travel rail.

3. The machining system of claim 1, further comprising:
a first housing unit provided outside the machine tool and configured to store workpieces; and
a second housing unit provided inside the machine tool and configured to store workpieces,
wherein the first workpiece conveyance mechanism is configured to convey a workpiece horizontally outside the machine tool, and
wherein the second workpiece conveyance mechanism is configured to convey a workpiece horizontally inside the machine tool.

4. The machining system of claim 1, wherein:
the machine tool further includes one or more workpiece spindles provided in the machining chamber, to each of which a workpiece is to be attached;
the first workpiece conveyance mechanism is configured to convey a workpiece to be attached to the workpiece spindles and/or a workpiece removed from the workpiece spindles; and
the second workpiece conveyance mechanism is configured to convey a workpiece to be attached to the workpiece spindles and/or a workpiece removed from the workpiece spindles.

5. The machining system of claim 2, wherein:
the machine tool further includes:
a workpiece headstock provided in the machining chamber and equipped with a workpiece spindle to which a workpiece is to be attached; and
a tool post provided above or below the workpiece spindle in the machining chamber, on which a tool to machine the workpiece is to be attached; and
when the machine tool is viewed from above,
the first travel rail is set within a machining equipment installation area, where the workpiece headstock and the tool post are arranged, in the machining chamber, and
the second travel rail is set within an in-machine traveling area between the door and the machining equipment installation area.

6. The machining system of claim 1, wherein:
the first workpiece conveyance mechanism includes:
a first gripper configured to grip a workpiece;
a first horizontal movement mechanism configured to move the first gripper horizontally; and
a first up-down movement mechanism configured to move the first gripper in an up-down direction; and
the first horizontal movement mechanism includes the first travel rail provided above the machining chamber and extending horizontally, and is configured to move the first gripper along the first travel rail.

7. The machining system of claim 1, wherein:
the machine tool further includes a cover that forms the machining chamber;
the cover includes a shutter that is provided on a top surface of the machining chamber and can be opened and closed; and
the first workpiece conveyance mechanism is configured to convey a workpiece between the outside of the machine tool and the machining chamber through the shutter.

8. The machining system of claim 1, wherein:
the machine tool further includes:
a workpiece spindle provided within the machining chamber, to which a workpiece is to be attached; and
a cover that forms the machining chamber;
the cover includes a door that is provided on a front surface of the machining chamber and can be opened and closed;
the second workpiece conveyance mechanism includes:
a second gripper configured to grip a workpiece; and
a second horizontal movement mechanism configured to move the second gripper horizontally; and
the second horizontal movement mechanism includes the second travel rail at least partially provided behind the door and in front of the workpiece spindle in the machining chamber and extending horizontally, and is configured to move the second gripper along the second travel rail.

9. The machining system of claim 8, wherein:
the second workpiece conveyance mechanism further includes an arm that is supported by the second travel rail and extends in an up-down direction; and
the arm includes:
a gripper side end to which the second gripper is attached; and
a travel rail side end that is closer to the second travel rail than the gripper side end and includes a fulcrum serving as the rotation center of the arm.

10. The machining system of claim 1, wherein:
the first workpiece conveyance mechanism includes:
a first gripper configured to grip a workpiece; and
a first horizontal movement mechanism configured to move the first gripper horizontally;
the first horizontal movement mechanism includes the first travel rail provided above the machining chamber and extending horizontally, and is configured to move the first gripper along the first travel rail;
the second workpiece conveyance mechanism includes:
a second gripper configured to grip a workpiece; and
a second horizontal movement mechanism configured to move the second gripper horizontally;
the second horizontal movement mechanism includes the second travel rail at least partially provided within the machining chamber and extending horizontally, and is configured to move the second gripper along the second travel rail; and
at least a part of the second travel rail is provided in front of the first travel rail in a front-back direction of the machine tool.

11. The machining system of claim 1, wherein:
the machine tool further includes:
a workpiece spindle provided in the machining chamber, to which a workpiece is to be attached; and
a controller configured to control operations of the workpiece spindle, the first workpiece conveyance mechanism, and the second workpiece conveyance mechanism; and
the controller is configured to execute the following processes (A) and/or (B) :
(A)
a process of the first workpiece conveyance mechanism conveying a workpiece placed on the outside of the machine tool into the machining chamber and attaching the workpiece to the workpiece spindle, and/or a process of the first workpiece conveyance mechanism unloading a workpiece attached to the workpiece spindle in the machining chamber and conveying the workpiece to the outside of the machine tool, and
(B)
a process of the second workpiece conveyance mechanism conveying a workpiece within the machining chamber and attaching the workpiece to the workpiece spindle, and/or a process of the second workpiece conveyance mechanism removing a workpiece attached to the workpiece spindle and conveying the workpiece within the machining chamber.
